# EUROPEAN PATENT APPLICATION

(11) **EP 2 660 486 A1**
(43) Date of publication of application: **06.11.2013**
(21) Application number: 11826107.2
(22) Date of filing: 25.11.2011
(51) Int. Cl.: F16C 19/24, F16C 41/00

(54) **SPACER FOR RADIAL NEEDLE BEARING**

(30) Priority: 26.11.2010 JP 2010264249; 10.11.2011 JP 2011246179
(71) Applicant: NSK Ltd., Tokyo 141-8560 (JP)
(72) Inventor: SADAMURA, Masaki, Gunma 3703344 (JP); TAKEMURA, Hiromichi, Gunma 3703344 (JP); KITAMURA, Koichi, Gunma 3703344 (JP)
(74) Representative: Hartmann, Jean-Luc
(86) International application number: PCT/JP2011/077171
(87) International publication number: WO 2012/070642

(57) **Abstract**

Provided is a spacer for a radial needle roller bearing that keeps dynamic torque of a double-row radial needle roller bearing low, while suppressing wear in areas of rubbing with adjacent members by causing there to be a film of oil having a proper amount of oil to exist in the areas of rubbing without excessive surface area. Concave sections that are recessed in a direction away from the adjacent members of the column sections 13a or rim sections 12 are formed in the outside surfaces in the radial direction and/or circumferential direction of the column sections 13a, and/or in the outside surfaces in the radial and/or axial direction of the rim sections 12, and preferably radial concave sections 22 having bottom and that are recessed toward the inside in the radial direction are formed in the outside surfaces in the radial direction of the column sections 13a.

## Description

### TECHNICAL FIELD

The present invention relates to improvement of a spacer that is provided in a double-row radial needle roller bearing in order to regulate the position in the axial direction of needle rollers that are arranged in double row.

### BACKGROUND ART

Radial bearings, in which a plurality of needle rollers is arranged between an outer raceway and an inner raceway each having a cylindrical surface, are widely used in rotation support apparatuses for various types of mechanical devices. Particularly, a radial needle roller bearing is used in the rotation support apparatus of a planet gear in an automobile transmission in order to support the planet gear so as to be able to rotate freely around the planet shaft that is supported by a carrier. This rotation support apparatus is operated in a state where a moment is applied between the planet gear, which corresponds to a member on the outer diameter side provided with an outer raceway, and the planet shaft, which corresponds to a member on the inner diameter side provided with an inner raceway, in a direction that causes the center axes of these members to incline with respect to each other. A Double-row radial needle roller bearing, having increased rigidity against that moment with a plurality of needle rollers installed at each of two locations that are separated from each other in the axial direction, is used in this rotation support apparatus.

In this double-row radial needle roller bearing, in order to maintain this moment rigidity, it is necessary to leave a space in the axial direction between the needle rollers that are arranged in double row, however, because of the structure of the radial needle roller bearing, it is not possible to regulate the positions in the axial direction of these needle rollers as is. Therefore, a cylindrical spacer such as disclosed in JP2005-16710(A), JP2005-325991(A), JP2008-101725(A), JP2008-303992(A), JP2009-115323(A) and JP2010-2029(A) is installed between the needle rollers that are arranged in double row, the spacer leaving a space between the needle rollers in the axial direction.

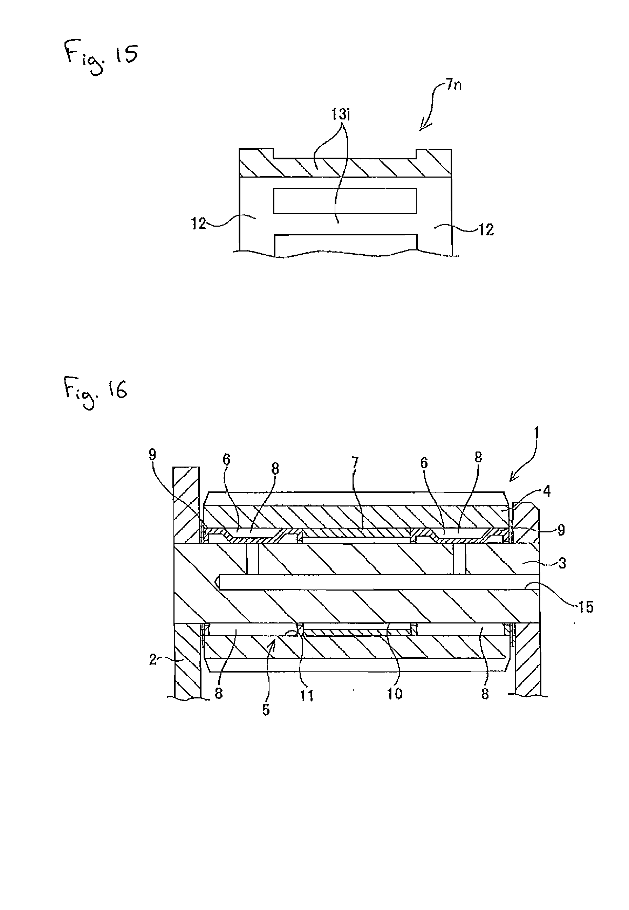

As an example of a known rotation support apparatus installed with a double-row radial needle roller bearing having a spacer, FIG. 16 illustrates a rotation support apparatus 1 for a planet gear of an automatic transmission of an automobile. This rotation support apparatus 1 supports a planet gear 4, which a member on the outer-diameter side, by way of a double-row radial needle roller bearing 5 so as to be able to freely rotate around the middle section of a planet shaft 3, which is a member on the inner-diameter side, and the both ends of which are supported by a carrier 2. This planet gear 4, which is a helical gear, engages with a sun gear and a ring gear (neither of these gears are illustrated in the figure) in a state installed in the automatic transmission of an automobile. Therefore, during operation of the automatic transmission of an automobile, an axial load is applied to the planet gear 4 in addition to a radial load, and as a result, a moment is applied to the planet gear 4 as described above in between the planet gear 4 and planet shaft 3 in a direction that causes the center axes to become inclined with each other.

In order to sufficiently maintain rigidity against this kind of moment, the double-row radial needle roller bearing 5 comprises a pair of radial needle roller bearings 6 and a spacer 7. In the example in the figure, each radial needle roller bearing 6 comprises a plurality of needle rollers 8, and a retainer 9 having an approximately cylindrical shape that hold these needle rollers 8 so as to be able to roll freely. The rolling surfaces of these needle rollers 8 come in rolling contact with both a cylindrical inner raceway 10 that is formed around the outer circumferential surface of the planet shaft 3 and a cylindrical outer raceway 11 that is formed around the inner circumferential surface of the planet gear 4. The spacer 7 is located between the retainers 9 of the radial needle roller bearings, and prevents the retainers 9 from coming close toward each other. A so-called full complement double-row radial needle roller bearing that has no retainer is also known. In this construction, one end surface in the axial direction of the needle rollers 8 in each row directly faces both end surfaces in the axial direction of the spacer 7. The spacer 7 maintains distance between the radial needle roller bearings 6 arranged in double row, and thus the rigidity of the double-row radial needle roller bearing 5 against the moment is maintained. During operation of the double-row radial needle roller bearing 5, lubrication oil is supplied to the both radial needle roller bearings 6 through an oil-supply path 15 that is provided inside the planet shaft 3.

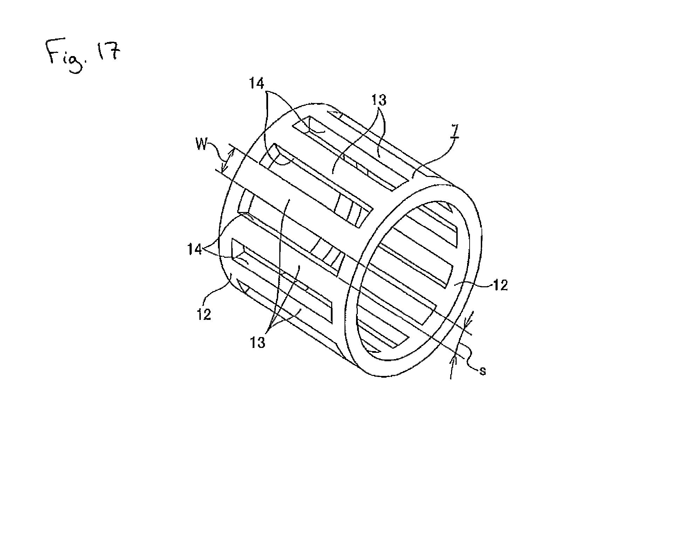

A spacer 7 having construction as illustrated in FIG. 17 is known as a spacer having this kind of function. This spacer 7 comprises a pair of rim sections 12 and a plurality of column sections 13. The rim sections 12 are ring shaped, and are arranged such that they are concentric with each other in the axial direction. The column sections 13 are located at a plurality of locations in the circumferential direction between both rim sections 12, and are continuous with both of the rim sections 12. The portions that are surrounded by the rim sections 12 and adjacent column sections 13 in the circumferential direction are through holes (pockets) 14 that pass through from the inner and outer circumferential surfaces of the spacer 7. These through holes 14 serve the function of suppressing bending of the planet shaft 3 by reducing the spacer 7 and lowering the inertial mass thereof, and thus lowering the centrifugal force that acts on the spacer 7 due to the orbital motion of the planet shaft 3. The through holes 14 is also conducive to better performance of the rotation support apparatus 1 by stabilizing the supply of lubrication oil to the areas of rolling contact of both needle roller bearings 6 through ensuring a lubrication path, and furthermore plays a role in lowering cost due to a reduction of material of the spacer 7. Unless otherwise noted, the terms axial direction, radial direction and circumferential direction refer to the axial direction, radial direction and circumferential direction of the spacer.

In a state where this spacer 7 is installed in the rotation support apparatus 1, the outer circumferential surface of the spacer 7 comes in contact with or closely faces the outer raceway 11, and surfaces on both ends in the axial direction come in contact with or closely face the end surfaces in the axial direction of the retainers 9 or needle rollers 8. In this state, there is lubrication oil in these areas of contact or closely facing areas. During operation of the rotation support apparatus 1, the outer circumferential surface of the spacer 7 and the outer raceway 11 of the planet gear 4, and the end surfaces on both ends in the axial direction of the sensor 7 and the end surfaces in the axial direction of the retainers 9 or needle rollers 8 displace relative to each other and rub against each other. There is an oil film of lubrication oil in these rubbing sections, so when the spacer 7 rotates relative to the adjacent members such as the planet gear 4, retainer 9 or needle rollers 8, the shear resistance that acts on this oil film makes up the majority of the rotational resistance of the spacer 7. This kind of shear resistance becomes larger the larger the surface area (facing area) is of the portions of the spacer 7 that come in contact with or closely face the adjacent members.

The friction resistance including the shear resistance and the like that is due to the relative displacement between the spacer 7 and the members adjacent to the spacer 7 becomes a cause for an increase in dynamic torque (occurrence of torque loss) of the rotation support apparatus 1, which causes the performance of rotating machinery such as the automatic transmission of an automobile to become worse. In other words, there are various causes for an increase in dynamic torque of the rotation support apparatus 1, such as rolling resistance or friction resistance of the radial needle roller bearing 6, and agitation resistance of lubrication oil, however, the friction resistance including the shear resistance that occurs between the spacer 7 and the adjacent members, and the agitation resistance of lubrication oil that occurs as the spacer 7 rotates are large enough that they cannot be ignored. Therefore, in order to improve the performance of the rotating machinery in which the rotation support apparatus 1 is assembled, it is desired that the resistance to the spacer 7 be kept low.

### [Related Literature]

### [Patent Literature]

[Patent Literature 1] JP2005-16710(A)
[Patent Literature 2] JP2005-325992(A)
[Patent Literature 3] JP2008-101725(A)
[Patent Literature 4] JP2008-303992(A)
[Patent Literature 5] JP2009-115323(A)
[Patent Literature 6] JP2010-2029(A)

### SUMMARY OF THE INVENTION

### [Problem to be Solved by the Invention]

In consideration of the situation described above, the object of the present invention is to reduce the sliding resistance in the areas of rubbing between the spacer for a radial needle roller bearing and adjacent members that are adjacent to the spacer, reduce the rotational resistance (dynamic torque) of a double-row radial needle roller bearing in which this spacer is installed, and reduce power loss in rotating machinery such as the automatic transmission of an automobile in which the double-row radial needle roller bearing is assembled. Furthermore, another object of the present invention is to provide a spacer for a radial needle roller bearing that keeps the dynamic torque of a double-row radial needle roller bearing low, which at the same time suppresses wear in the areas of rubbing with opposing adjacent members by maintaining a suitable amount of oil film without excessive surface area.

### [Means for Solving the Problems]

The spacer for a radial needle roller bearing of the present invention comprises: a pair of ring-shaped rim sections that are separated in the axial direction, and are concentric with each other; and a plurality of column sections that are located at a plurality of locations in the circumferential direction of the rim sections and that connect these rim sections; wherein the spacer is placed between a cylindrical inner raceway that is formed around the outer circumferential surface of an inner-diameter side member, and a cylindrical outer raceway that is formed around the inner circumferential surface of an outer-diameter side member, and between a pair of radial needle roller bearings that are separated in the axial direction. Through holes that pass through from the outer circumferential surface to the inner circumferential surface of the spacer are formed in between adjacent column sections in the circumferential direction.

Particularly, in the spacer for a radial needle roller bearing of the present invention, concave sections are formed in outside surfaces in the radial direction and/or circumferential direction of the column sections, and/or in outside surfaces in the radial direction and/or axial direction of the rim sections, such that the concave sections are recessed in a direction away from one or both of the adjacent (inner-diameter side and/or outer-diameter side) members that are adjacent to the column sections or the rim sections.

More specifically, in one aspect of the present invention, the concave sections that are recessed in a direction away from the adjacent members are circumferential concave sections that are formed in the outside surfaces in the circumferential direction of the column sections and recessed toward the inside in the circumferential direction; and the width dimension in the circumferential direction of the column sections where these circumferential concave sections are formed is less than the width dimension in the circumferential direction of the through holes that are formed in between adjacent column sections in the circumferential direction. The circumferential concave sections can be formed in one or both of the outside surfaces in the circumferential direction of the column sections, and also in all or part in the axial direction of the column sections. In case that the circumferential concave sections are formed in both outside surfaces in the circumferential direction of the column sections, they are preferably aligned with each other in the circumferential direction. Furthermore, it is possible to form a plurality of circumferential concave sections in the axial direction of the column sections.

Alternatively or additionally, the number of column sections can be three to six; the area on the outer circumferential surface of the through holes that are formed between adjacent column sections in the circumferential direction can be greater than the surface area of the outside surfaces in the circumferential direction of the column sections; and the concave sections that are recessed in a direction away from the adjacent members can be composed of enlarged portions of the through holes.

Preferably, the number of column sections is four or six; and adjacent column sections in the circumferential direction are arranged so as to be inclined with respect to the axial direction in opposite directions from each other.

Alternatively or additionally, the concave sections that are recessed in a direction away from the adjacent member can be formed by making the thickness in the radial direction of the column sections small, and causing the outside surfaces of the column sections to be recessed toward the inside in the radial direction more than the outer circumferential surfaces of the rim sections.

Alternatively or additionally, the concave sections that are recessed in a direction away from the adjacent members can be formed in the outside surfaces in the axial direction of the rim sections, and can be composed of axial concave sections that are recessed toward the inside in the axial direction.

The axial concave sections can be formed in the outer half section of the rim sections, and can be composed of partial conical convex surface shaped inclined surface sections.

The axial concave sections can also be composed of a plurality of concave sections that are formed intermittently in the circumferential direction of the rim sections and over the length in the radial direction thereof.

Moreover, the column sections can be continuously connected by a plurality of rim elements that are partially arc shaped, and are located such that the phase in the circumferential direction is shifted a half pitch; and the axial concave sections can be composed of non-continuous sections between adjacent rim elements in the circumferential direction.

Alternatively, the axial concave sections can be annular shape concave sections that are formed around the entire circumference in the middle section in the radial direction of the outside surfaces in the axial direction of the rim sections.

Furthermore, the axial concave sections can be composed of a plurality of round concave sections that are formed in the outside surfaces in the axial direction of the rim sections.

Alternatively or additionally, the concave sections that are recessed in a direction away from the adjacent member can be composed of radial concave sections that have a bottom and are formed in the outside surfaces in the radial direction of the column sections and are recessed toward the inside in the radial direction. These radial concave sections can be also formed in the outer circumferential surfaces of the rim sections.

The radial concave sections can also be formed by positioning the portions that surround the radial concave sections all around further on the outside in the radial direction than the radial concave sections. More specifically, the radial concave sections can be formed over the length in the axial direction in the outside surfaces in the radial direction of the column sections, and both end sections in the circumferential direction of these radial concave sections are partitioned by the edge sections on both ends in the circumferential direction of the column sections, and both end sections in the axial direction of these radial concave sections are partitioned by the rim sections.

Alternatively, the radial concave sections can be composed of a plurality of round concave sections that are formed in the outside surfaces in the radial direction of the column sections.

### [Effect of the Invention]

With the present invention, it is possible to reduce the surface area (facing surface area) where the spacer for a radial needle roller bearing comes in contact with or closely faces the adjacent members, and it is possible to reduce the rotation resistance (friction resistance, including the shear resistance) of the spacer. Therefore, with the spacer for a radial needle roller bearing of the present invention, it is possible to reduce torque loss during operation of rotation support apparatus in which a double-row radial needle roller bearing is assembled. Moreover, it is possible to reduce the weight and lower the cost of the spacer for a radial needle roller bearing.

Particularly, in an aspect of the present invention where the radial concave sections, which have a bottom and are recessed toward the inside in the radial direction, are formed in the outside surfaces in the radial direction of the column sections, a suitable film of oil is formed in the areas of rubbing between the outer raceway of the outer-diameter side member and the outer circumferential surfaces of the spacer of which there is a high possibility of relative rotation with respect to the outer raceway, so it is possible to prevent extreme wear that occurs when there is no oil in the areas of rubbing, as well as it is possible to keep the surface area of the oil film small, and thus large shear from occurring in the portion of the oil film during relative rotation between the outer circumferential surfaces of the spacer and the outer raceway of the outer-diameter side member is prevented, and it is possible to keep the dynamic torque (torque loss) of the double-row radial needle roller bearing low.

Furthermore, by forming the axial concave sections, which are recessed toward inside in the axial direction, in the outside surfaces in the axial direction of the rim sections, it is possible to improve the lubricated state between the end surfaces in the axial direction of the spacer for a radial needle roller bearing and the end surfaces in the axial direction of the retainers or needle rollers.

### BRIEF DESCRIPTION OF THE DRAWINGS

FIG. 1 is a perspective view illustrating a first example of a spacer for a radial needle roller bearing of the present invention.
FIG. 2 is similarly a perspective view illustrating a second example.
FIG. 3 is similarly a perspective view illustrating a third example.
FIG. 4 is similarly a perspective view illustrating a fourth example.
FIG. 5 is similarly a perspective view illustrating a fifth example.
FIG. 6 is similarly a perspective view illustrating a sixth example.
FIG. 7 is similarly a perspective view illustrating a seventh example.
FIG. 8 is similarly a perspective view illustrating an eighth example.
FIG. 9 is similarly a perspective view illustrating a ninth example.
FIG. 10 is similarly a perspective view illustrating a tenth example.
FIG. 11 is similarly a perspective view illustrating an eleventh example.
FIG. 12 is similarly a perspective view illustrating a twelfth example.
FIG. 13 is similarly a perspective view illustrating a thirteenth example.
FIG. 14 is similarly a perspective view illustrating a fourteenth example.
FIG. 15 is a cross-sectional view of section X-X in FIG. 14.
FIG. 16 is a cross-sectional view illustrating an example of a rotation support apparatus 1 that comprises a double-row radial needle roller bearing in which the spacer of the present invention is assembled.
FIG. 17 is a perspective view illustrating conventional construction of a spacer for a radial needle roller bearing.

### BEST MODES FOR CARRYING OUT THE INVENTION

As illustrated in FIG. 16, the spacer for a radial needle roller bearing of the present invention is placed between a cylindrical inner raceway 10 that is formed around the outer circumferential surface of an inner-diameter side member 3 such as a planet shaft, and a cylindrical outer raceway 11 that is formed around the inner circumferential surface of an outer-diameter side member 4 such as a planet gear, and between a pair of radical needle roller bearings 6 of a double-row radial needle roller bearing 5 that are separated in the axial direction.

The basic construction of the spacer for a radial needle roller bearing of the present invention is the same as that illustrated in FIG. 17 and comprises a pair of rim sections 12 that are both ring shaped and are concentric with each other in the axial direction, and a plurality of column sections 13 that are located in a plurality of locations in the circumferential direction between these rim sections 12 and connect the rim sections 12. Through holes 14 that pass through from the inner to outer circumferential surface of the spacer 7 are formed between adjacent column sections in the circumferential direction so that they are surrounded by the rim sections 12 and column sections 13. When this spacer 7 is installed in the space surrounded by the inner raceway 10, outer raceway 11 and a pair of radial needle roller bearings 6, the surfaces come in contact with or closely face the surfaces of the adjacent members, and in this state, rotates relative to the adjacent members. More specifically, the spacer is used with the outer circumferential surface of the spacer 7 coming in sliding contact with or closely facing the outer raceway 11, and both end surfaces in the axial direction coming in sliding contact with or closely facing the end surfaces in the axial direction of the retainers 9 or needle rollers 8. Based on the conventional spacer 7 illustrated in FIG. 17, the present invention is an improvement of this spacer 7, so the explanation below will center on the improvements, and explanations of portions that are common with this conventional construction will be omitted or simplified.

The various parameters (dimensions, material, surface roughness) of the spacer of present invention are not particularly limited, for example, parameters such as below can be used.

### [Dimensions]

| | |
|---|---|
| Inner diameter: | 5 to 30 mm |
| Thickness in the radial direction: | 0.3 to 3.0 mm |
| Width in the axial direction: | 2 to 30 mm |

Width in the circumferential direction of the through holes: 1 mm or greater Width in the axial direction of the outside surface in the radial direction of the rim sections: 1 mm or greater

### [Material]

### - Ferrous Alloy

Non heat treated products such as cold rolled steel plate (SPCC), ultra-low carbon steel (AISI-1010) and chrome molybdenum steel (SCM415), or a material obtain after performing heat treatment such as carburizing or carbonitriding to these materials can be used as the ferrous alloys. By using these ferrous alloys, it is possible to maintain sufficient strength and rigidity even under high temperature conditions.

### - Synthetic Resin

Polyacetal resin, polyamide resin (nylon 46, nylon 66), polyphenylene sulfide resin (PPS) and the like can be used as synthetic resins. By using these synthetic resins, the spacer can be formed easily by injection molding, which not only makes it possible to lower costs, but also makes it possible to make the spacer more lightweight.

### [Surface Roughness]

Of the spacer surfaces, the outer circumferential surface and end surfaces in the axial direction that come in contact with or closely face the adjacent members are preferably smooth surfaces that can keep the friction resistance with the adjacent member low during relative rotation. More specifically, the center line average surface roughness Ra of at least the outer circumferential surface and the end surfaces in the axial direction is preferably 6.3 µm or less.

### [Example 1]

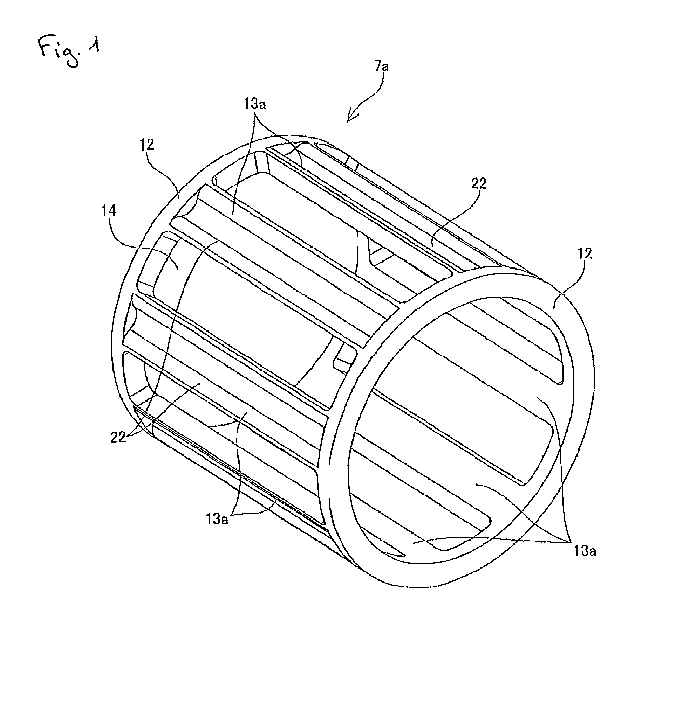

FIG. 1 illustrates a first example of an embodiment of the present invention. The features of the spacer 7a of this example is that radial concave sections 22 that are recessed toward the inside in the radial direction and have a bottom are formed in outside surfaces in the radial direction of the column sections 13a as concave sections that are recessed in a direction away from the outer-diameter side member (planet gear) 4, which is an adjacent member, which makes it possible for relative rotation between the spacer 7a and the outer-diameter side member 4 to performed smoothly.

In this example, the inside surfaces in the radial direction of the column sections 13a and the inner circumferential surfaces of the pair of rim sections 12 are on a single cylindrical surface, and both end section in the circumferential direction of the outside surfaces in the radial direction of these column sections 13a and the outer circumferential surfaces of the rim sections 12 are on a single cylindrical surface. Radial concave sections 22 are formed in the middle sections in the circumferential direction of the column sections 13a. In this example, these radial concave sections 22 are formed over the length in the axial direction of the column sections 13a. Moreover, the cross-sectional shape or the contour of the bottom surface of the radial concave sections 22 is composed of a complex arc along the entire length in the width direction. This complex arc comprises a concave arc in the center section in the width direction in the circumferential direction and convex arcs on both end sections in the width direction in the circumferential direction. These arc sections are smoothly continuous with each other, and the edges on both ends in the circumferential direction of the radial concave sections 22 and the outer circumferential surface on both end section in the circumferential direction of the column sections 13a are also smoothly continuous. With the construction described above, both end sections in the circumferential direction of the radial concave sections 22 are partitioned by both end sections in the circumferential direction of the column sections 13a, and both end sections in the axial direction of the radial concave sections 22 are partitioned by the rim sections 12. However, the cross-sectional shape of the radial concave sections 22 could also be trapezoidal or triangular.

When the spacer 7a of this example is installed in a rotation support apparatus 1 as illustrated in FIG. 16, the outside surfaces in the radial direction of the column sections 13a come in contact with or closely face the outer raceway 11 of the outer-diameter side member 4 However, the radial concave sections 22 are recessed in a direction going away from the adjacent member, which is the outer raceway 11 of the outer-diameter side member 4, so the friction surface area between the outer raceway 11 and the outside surface in the radial direction of the spacer 7a becomes smaller by the amount of the surface area of the radial concave sections 22, and thus it is possible to reduce the torque loss (dynamic torque, friction resistance) of the double-row radial needle roller bearing unit 5 that is due to the existence of the spacer 7a. Moreover, it is possible decrease the volume of the spacer 7a by the amount where the radial concave sections 22 are formed, and thus it is possible to make the spacer itself more lightweight and low cost.

Moreover, lubrication oil that is fed from the oil-supply path 15 to the inner-diameter side of the outer raceway 11 is stored inside the radial concave sections 22. In this state, as the spacer 7a rotates relative to the outer raceway 11, the lubrication oil that is stored inside the radial concave sections 22 enters between the outer circumferential surface of the spacer 7a and the outer raceway 11, forming an oil film in this portion. Therefore, extreme wear that occurs due to a lack of an oil film in the area of rubbing between the spacer 7a and the outer raceway 11 is prevented. On the other hand, the distance between the bottom surface of the radial concave sections 22 and the outer raceway 11 can be sufficiently maintained in the radial direction, so because the lubrication oil is stored inside these radial concave sections 22, large shear resistance does not occur when the spacer 7a rotates relative to the outer raceway 11. As a result, it is possible to keep the dynamic torque low while suppressing wear in the area of rubbing between the outer circumferential surface of the spacer 7a and the outer raceway 11.

In order to keep the shear resistance due to the existence of an oil film low, it is preferable that the depth in the radial direction and the width of the radial concave sections 22 be sufficiently maintained within a range that will not affect the rigidity and strength of the spacer 7a, including the column sections 13a, according to the dimensions of the column sections 13a. For example, it depends on the parameters of the spacer 7a as well, however, preferably the depth in the radial direction of the radial concave sections 22 is 0.5 mm or greater, and more preferably 1 mm or greater. The thickness in the radial direction of the center section in the circumferential direction of the column sections 13a becomes smaller by the amount that the depth in the radial direction of the radial concave sections 22 becomes greater, however, the thickness in the radial direction of both end sections in the circumferential direction does not become smaller. Therefore, it is possible to sufficiently maintain the strength and rigidity of the spacer 7a. Instead of forming the radial concave sections 22 along the entire length of the column sections 13a, one could be formed in part in the axial direction, or a plurality could be formed in series.

### [Example 2]

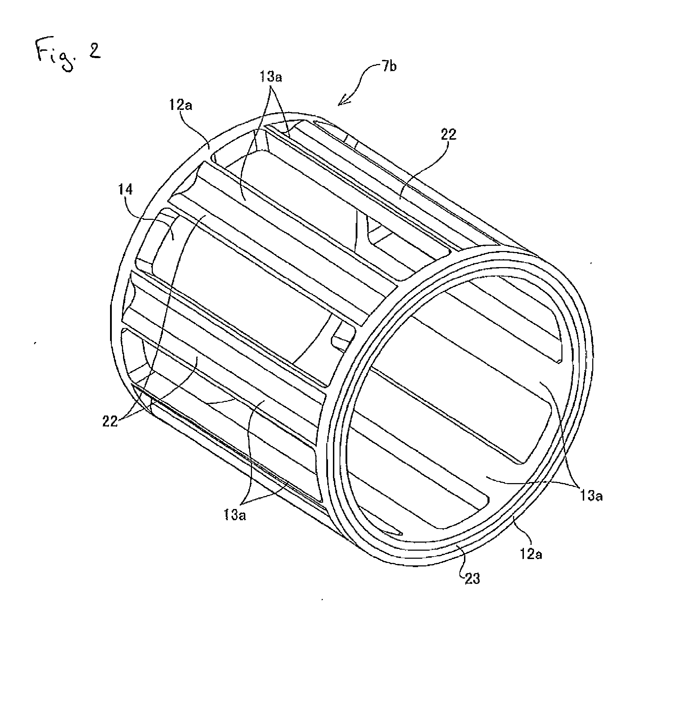

FIG. 2 illustrates a second example of an embodiment of the present invention. In the spacer 7b of this example, in addition to forming radial concave sections 22 in the outside surfaces in the radial direction of the column sections 13a that are recessed toward the inside in the radial direction and have a bottom, as in the first example, annular shape concave sections 23 are formed around the entire circumference in the middle section in the radial direction of the outside surfaces in the axial direction of the pair of rim sections 12a located on both end sections in the axial direction. However, it is also allowed to form the annular shape concave sections 23 in partial ring shapes that are not continuous in the circumferential direction. When a spacer 7b comprising these annular shape concave sections 23 is installed in a rotation support apparatus 1 as illustrated in FIG. 16, the outside surfaces in the axial direction of the rim sections 12a closely face the end surfaces in the axial direction of the retainers 9 or needle rollers 8. Lubrication oil that is fed from the oil-supply path 15 to the inside of the outer raceway 11 is stored in the annular shape concave sections 23.

In this state, as the spacer 7b displaces in the circumferential direction relative to the retainers 9 or needle rollers 8, the lubrication oil that is stored inside the annular shape concave sections 23 enter between the end surfaces in the axial direction of the spacer 7b and of the retainers 9 or needle rollers 8, and forms oil films in these portions. Therefore, extreme wear that occurs due to no oil film in the areas of rubbing between the spacer 7b and the retainers 9 or needle rollers 8 is prevented. On the other hand, the distance between the bottom surface of the annular shape concave sections 23 and the end surfaces in the axial direction of the retainers 9 or needle rollers 8 is sufficiently maintained in the axial direction, so because the lubrication oil is stored inside these annular shape concave sections 23, large shear resistance does not occur when the spacer 7b rotates relative to the retainers 9 or needle rollers 8. As a result it is possible to keep dynamic torque low while suppressing wear of the areas of rubbing between these members.

In order to keep the shear resistance due to the existence of an oil film low, it is preferable that the depth in the axial direction and width of the annular shape concave sections 23 be ensured within a range that does not affect the rigidity and strength of the spacer 7b, including the rim sections 12a, according to the dimensions of the rim sections 12a. As long as the thickness in the radial direction of the rim sections 12a is sufficiently large, it is also possible to form a plurality of concentric annular shape concave sections in the outside surfaces in the axial direction of the rim sections 12a. The construction and function of the other parts are the same as in the first example.

### [Example 3]

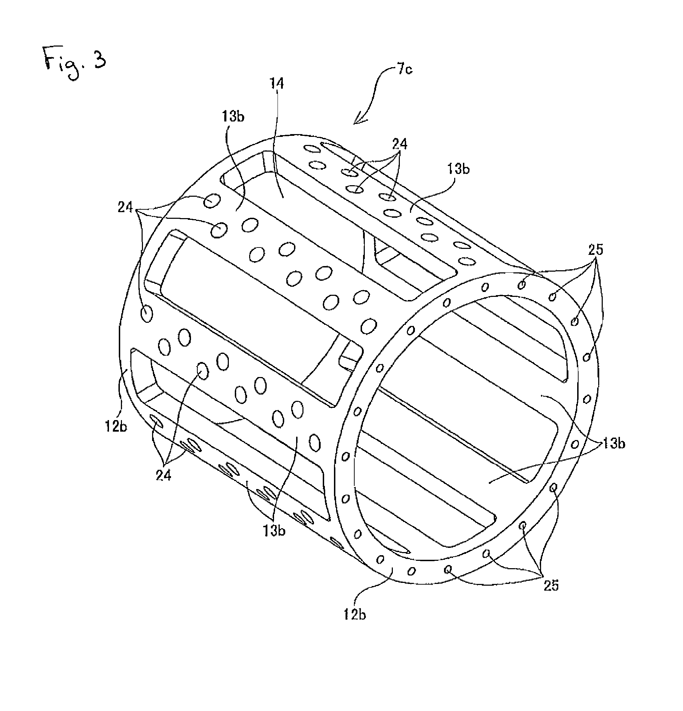

FIG. 3 illustrates a third example of an embodiment of the present invention. In the case of the spacer 7c of this example, a plurality of round concave sections 24, which are radial concave sections, are formed in the outside surfaces in the radial direction of each of the column sections 13b. Moreover, a plurality of round concave sections 25, which are concave sections in the axial direction, are formed in the outside surfaces in the axial direction of each of the pair of rim sections 12b that are formed on both end sections in the axial direction of the spacer 7c. These round concave sections 24, 25 are each partial spherical shaped concave sections. These round concave sections 24, 25 also function in the same way as the radial concave sections 22 and the annular shape concave sections 23 of the second example, and contribute in keeping the dynamic torque low while suppressing wear in the areas of rubbing between the spacer 7c and adjacent members. Instead of these round concave sections 24, 25, it is possible for the concave sections to be rectangular or elliptical.

In order to keep the shear resistance that is due to the existence of an oil film low, it is preferred that the depth in the radial direction, the diameter and the number of round concave sections 24, and that the depth in the axial direction, the diameter and the number of round concave sections 25 be regulated within a range, according to the dimensions of the column sections 13b and rim sections 12b, that does not affect the rigidity and strength of the spacer 7c, including these portions. The construction and function of the other portions are the same as in the second example.

### [Example 4]

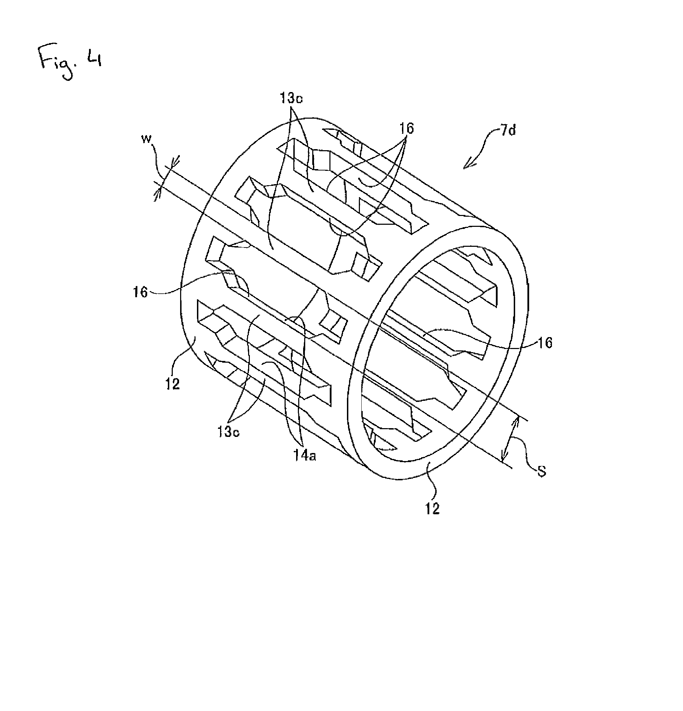

FIG. 4 illustrates a fourth example of an embodiment of the present invention. In the spacer 7d of this example, the plurality of column sections 13c that are parallel with each other are such that the width in the circumferential direction of the middle section in the axial direction of each is narrower than the widths in the circumferential direction of both end sections in the axial direction, and is narrower than the width in the circumferential direction of the through holes 14a that exist between adjacent column sections 13c. In other words, circumferential concave section 16 that are recessed in the circumferential direction are formed in the middle sections in the axial direction of the outside surfaces in circumferential direction for each of outside surfaces in the circumferential direction of the column sections 13c, and whereas in the conventional construction, the width W in the circumferential direction of the column sections 13 was greater than the width S in the circumferential direction of the through holes 14, in this example, the width w in the circumferential direction of the middle section in the axial direction of the column sections 13c is less than the width S in the circumferential direction of the through holes 14 (w < S). In this example, the opposing area on the outer circumferential surface of the spacer 7d that faces the outer raceway 11 is reduced by the amount of the surface area of the openings in the radial direction of the circumferential concave sections 16. In other words, in the construction of this embodiment, the circumferential concave sections 16 are concave sections that are recessed in a direction away from the adjacent member, which is the outer-diameter side member 4.

The width w in the circumferential direction of the middle section in the axial direction of the column sections 13c is sufficiently less than the width W in the circumferential direction of the column sections in the conventional construction illustrated in FIG. 17. On the other hand, the width in the circumferential direction of both end sections in the axial direction of the column sections 13c is nearly the same as the width W in the circumferential direction of the column sections in the conventional construction. However, the length in the axial direction of both end sections in the axial direction of the column sections 13c where the width in the circumferential direction became wide is short, so the width in the circumferential direction of both end sections in the axial direction can be a little wider than the width W in the circumferential direction of the column sections of the conventional construction.

The shape and size (length in the axial direction, depth in the circumferential direction) of the circumferential concave sections 16 are properly regulated within the range of the parameters described above so that the amount of surface area facing the outer raceway 11 is as small as possible, taking into consideration the strength necessary for the column sections 13c.

Moreover, the shape of the circumferential concave sections 16 is a trapezoidal shape in the construction illustrated in FIG. 4, however the shape is not limited to a trapezoidal shape, and, for example, and any shape could be used such as an arc shape, an elliptical shape, a rectangular shape or the like, within a range where it is possible to maintain the strength and rigidity of the column sections 13c. Furthermore, in the construction illustrated in FIG. 4, circumferential concave sections 16 are formed on both sides in the circumferential direction of the column sections 13c, however, it is also possible to form the circumferential concave sections 16 on only one of the sides. In either case, as long as the spacer 7d itself can prevent the pair of radial needle roller bearings 6 that are separated in the axial direction from moving toward each other, no particularly large radial load or axial load will be applied, so the required strength and rigidity are not especially high. Therefore, even though the circumferential concave sections 16 are made to be somewhat large in order to reduce the surface area on the outer circumferential surface of the spacer 7d and to make the spacer 7d lighter, no problems occur from the aspect of reliability or durability of the double-row radial needle roller bearing 5 in which the spacer 7d is installed.

With the spacer 7d of this example, the width S in the circumferential direction of the through holes 14a is made to be larger than the width s in the circumferential direction of the through holes 14 that were formed in the spacer 7 of the conventional construction illustrated in FIG. 17 by the amount of the width w in circumferential direction of the middle section in the axial direction of the column sections 13c (S > s). The surface area of the outer circumferential surface of the spacer 7d, including the outside surfaces in the radial direction of the column sections 13c is made to be less than the surface area of the outer circumferential surface of the spacer 7 of the conventional construction by the amount that the width S in the circumferential direction of the through holes 14a is increased. The friction resistance, including the shear resistance, that acts between the outer circumferential surface of the spacer 7d and the outer raceway 11 that is formed around the inner circumferential surface of the outer-diameter side member 4 can be decreased by the amount that the surface area on the outer circumferential surface of the spacer 7d is reduced. As a result, it is possible to keep the dynamic torque of the double-row radial needle roller bearing 5 in which the spacer 7d is assembled small, and it is possible to improve the performance of rotating machinery that comprises this double-row radial needle roller bearing unit 5. Moreover, it is possible to make the spacer 7d more lightweight and lower the cost by reducing the amount of raw material by the amount that the width w in the circumferential direction of the middle sections in the axial direction is reduced by forming the circumferential concave sections 16 in the column sections 13c. Lightening the weight contributes to suppressing bending of the inner-diameter side member 3 such as the planet shaft that is caused due to centrifugal force that occurs when there is orbital motion during operation.

The spacer 7d of this example does not have the effect of causing a suitable film of oil to exist in the area of rubbing where there is a high possibility of relative rotation between the outer raceway 11 and outer circumferential surface of the spacer 7d, and preventing extreme wear from occurring due to no film of oil in this area of rubbing. Therefore, it is also possible to combine this example with the first through third examples, and simultaneously form radial concave sections in the outside surface in the radial direction of the column sections 13c (particularly, the middle sections in the axial direction) and/or form axial concave sections in the outside surfaces in the axial direction of the rim sections 12, within a range where it is possible to ensure the strength and rigidity of the column sections 13c.

### [Example 5]

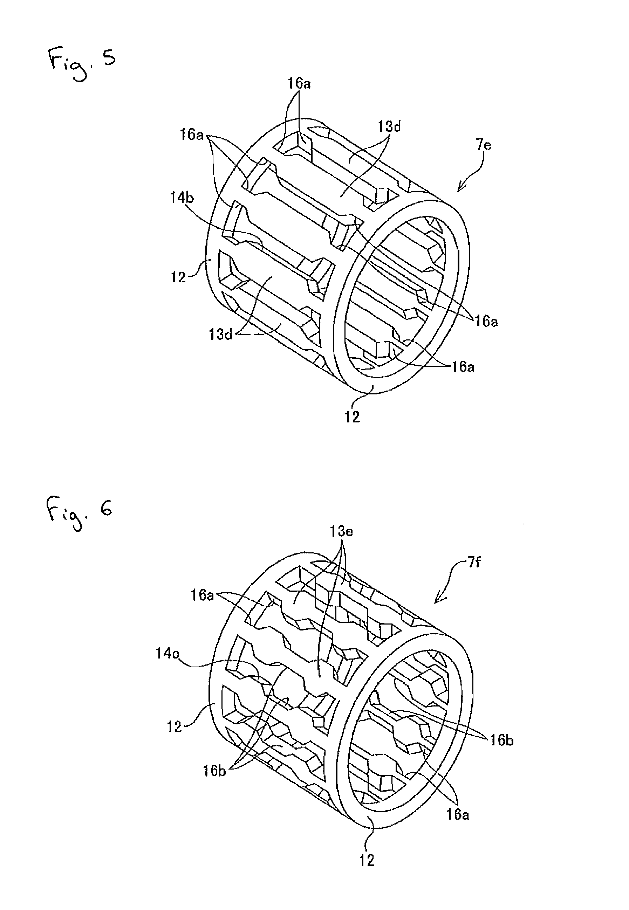

FIG. 5 illustrates a fifth example of an embodiment of the present invention. In the case of the spacer 7e of this example, opposite from that of the spacer 7d of the fourth example, circumferential concave sections 16a are formed on the outside surfaces in the circumferential direction of both end sections in the axial direction of the column sections 13d, and not only is the surface area of the outside surfaces in the radial direction of the column sections 13d is less, but also the surface area of the outer circumferential surface of the spacer 7e is less than that of the conventional construction illustrated in FIG. 17. In other words, in this example, the width in the circumferential direction of the middle section in the axial direction of the column sections 13d is less than approximately the same as the width W of the column sections 13 of the conventional construction illustrated in FIG. 17, and the width in the circumferential direction of both end sections in the axial direction of the column sections 13d is less than this.

The shape and size (length in the axial direction, depth in the circumferential direction) of the circumferential concave sections 16a, taking into consideration of the strength required for the column sections 13d, are appropriately regulated so that the surface area that faces the outer raceway 11 is as small as possible, within the parameters described above and similar to the fourth example, except that it is necessary to add up the lengths in the axial direction of the two circumferential concave sections 16a for each outside surface in the circumferential direction of the column sections 13d. The construction and function of the other parts are the same as in the fourth example.

### [Example 6]

FIG. 6 illustrates a sixth example of an embodiment of the present invention. The spacer 7f of this example has construction that is a combination of the fourth and fifth examples. In other words, in the case of the construction of this example, circumferential concave sections 16b are formed on the outside surfaces in the circumferential direction of the middle sections in the axial direction of the column sections 13e, and circumferential concave sections 16a are formed on the outside surfaces in the circumferential direction of both end sections in the axial direction of the column sections 13e. The surface area of the outside surfaces in the radial direction of the column sections 13e and thus the surface area of the outer circumferential surface of the spacer 7f are reduced by the amount of these circumferential concave sections 16a, 16b. The shape and size (length in the axial direction, depth in the circumferential direction) of the circumferential concave sections 16a, 16b, taking into consideration of the strength required for the column sections 13d, are appropriately regulated so that the surface area that faces the outer raceway 11 is as small as possible, within the parameters described above and similar to the fourth example, except that it is necessary to add up the lengths in the axial direction of the circumferential concave sections 16a, 16b for each outside surface in the circumferential direction of the column sections 13e. The construction and function of the other parts are the same as in the fourth example.

### [Example 7]

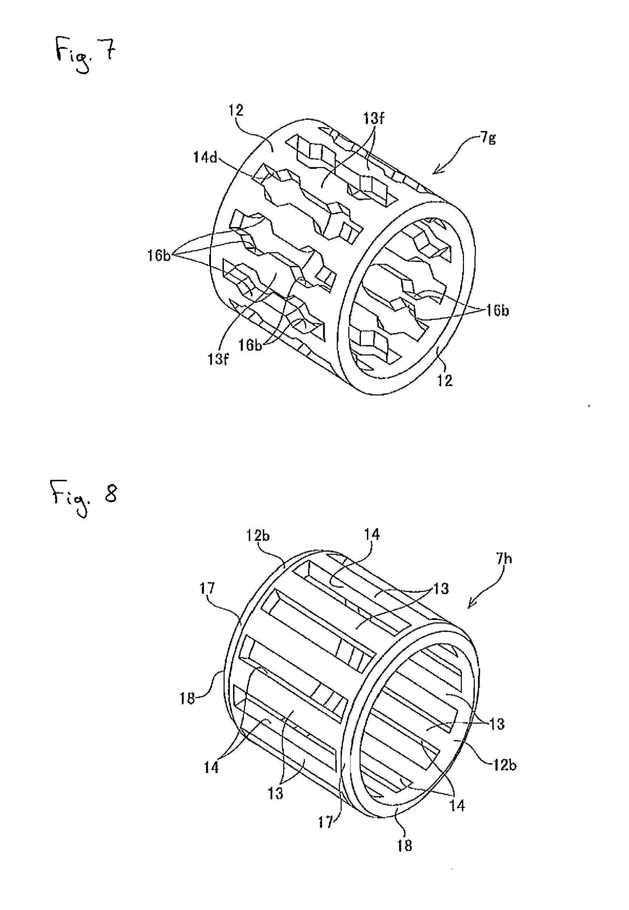

FIG. 7 illustrates a spacer 7g of a seventh example of an embodiment of the present invention. In this spacer 7g, circumferential concave sections 16b are formed at two locations for each of the outside surfaces in the circumferential direction of the middle section in the axial direction of the column sections 13f. The surface area of the outside surfaces in the radial direction of the column sections 13f and thus the surface area of the outer circumferential surface of the spacer 7g are reduced by the amount of these concave sections 16b. The shape and size (length in the axial direction, depth in the circumferential direction) of the concave sections 16b in the circumferential direction, taking into consideration of the strength required for the column sections 13f, are appropriately regulated so that the surface area that faces the outer raceway 11 is as small as possible, within the parameters described above and similar to the fourth example, except that it is necessary to add up the lengths in the axial direction of the two circumferential concave sections 16b for each outside surface in the circumferential direction of the column sections 13f. The construction and function of the other parts are the same as in the fourth example.

### [Example 8]

FIG. 8 illustrates an eighth example of an embodiment of the present invention. In the spacer 7h of this example, partial conical shaped inclined surface sections 17 are formed on the outer half section in the radial direction of the outside surfaces in the axial direction of the pair of ring-shaped rim sections 12b (side surfaces in the axial direction on opposite sides from each other), and these outer half sections in the radial direction form concave sections that are recessed in a direction away from the adjacent member. On the other hand, the inner half section in the radial direction of the outside surfaces in the axial direction of the rim sections 12b are flat surfaces 18 that are orthogonal to the center axis of the spacer 7h.

Making the size (dimension in the axial direction and dimension in the radial direction) of the inclined surface sections 17 as large as possible within a range where it is possible to ensure the strength and rigidity of the rim sections 12b, is preferable from the aspect of reducing the surface area of the areas of rubbing with the adjacent member, as well as from the aspect of lightening the weight of the spacer 7h. For example, preferably the dimension in the axial direction is 1/2 to 3/4 the width in the axial direction of the rim sections 12b, and the dimension in the radial direction is 1/2 to 3/4 the thickness in the radial direction of the rim sections 12b. Moreover, the angle of inclination of the inclined surface sections 17 with respect to the center axis of the spacer 7h is set at more than 0° and less than 90°, and preferably is set within a range of 30° to 60°.

In a state where the spacer 7h of this example is installed in the double-row radial needle roller bearing 5, the flat surfaces 18 come in contact with or closely face the end surfaces in the axial direction of the retainers 9 or needle rollers 8 of the pair of radial needle roller bearings 6. The surface area of the flat surfaces 18 is less than the surface area of the outside surfaces in the axial direction of the rim sections 12 of the conventional construction illustrated in FIG. 17 due to the existence of the inclined surface sections 17. Therefore, in this example, it is possible to reduce the friction resistance that occurs due to relative rotation between the spacer 7h and the retainers 9 or needle rollers 8. Moreover, the facing surface area between the outer circumferential surface of the rim sections 12b and the outer raceway 11 is reduced, so it is possible to decrease the friction resistance that occurs due to relative rotation between the spacer 7h and the outer-diameter side member 4 by that amount. Moreover, it is possible to reduce the dynamic torque of the double-row radial needle roller bearing 5. Furthermore, it is possible to reduce the volume of the spacer 7h and thus lighten the weight of the spacer 7h by the amount where the inclined surface sections 17 are formed. Although it is disadvantageous from the aspect of reducing the volume of the spacer, instead of inclined surface sections 17, it is also possible to form convex arc shape surfaces that are continuous from the outside surfaces in the radial direction of the rim sections 21b to the flat surfaces 18. The construction of this example can also be combined with the construction of any of the examples 1 to 7. The construction and function of the other parts are the same as in the fourth example.

### [Example 9]

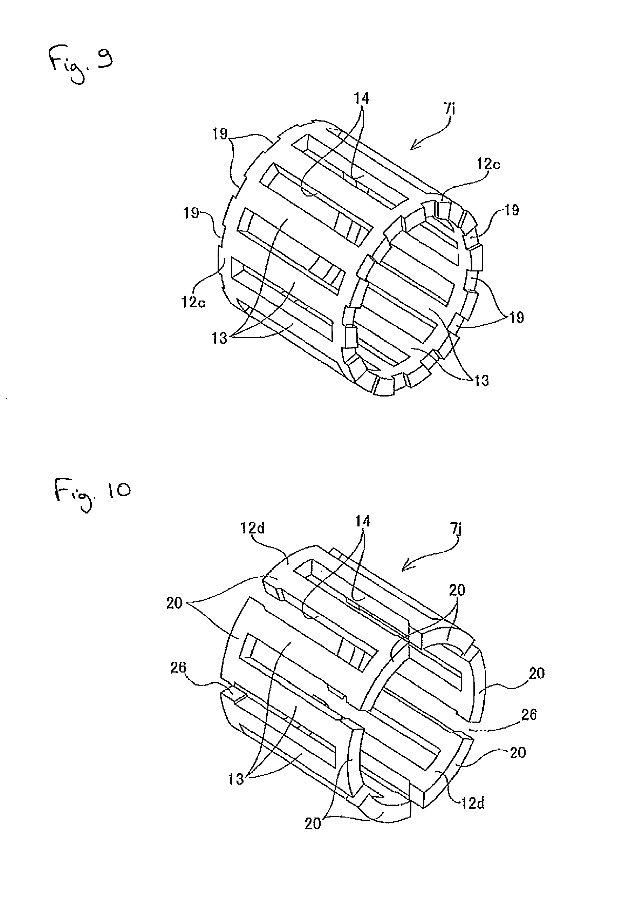

FIG. 9 illustrates a ninth example of an embodiment of the present invention. In the spacer 7i of this example, a plurality of axial concave sections 19 that are recessed in the axial direction intermittently around the circumferential direction of the outside surfaces in the axial direction of the pair of ring-shaped rim sections 12c. In this example, these axial concave sections 19 are rectangular shaped and pass in the radial direction through the rim sections 12c, or in other words, pass through from the inner perimeter edge to the outer perimeter edge of the outside surfaces in the axial direction. In this example, these axial concave sections 19 are arranged at a uniform pitch in the circumferential direction, however, the pitch does not necessarily need to be uniform.

The size (width in the circumferential direction, depth in the axial direction) of the concave sections 19 in the axial direction is determined, for example, according to the size (diameter, thickness in the radial direction, width in the axial direction) of the rim sections 12c, and setting the size as large as possible within a range where it is possible to maintain the strength and rigidity required for the rim sections 12c after the axial concave sections 19 have been formed is preferable from the aspect of reducing torque loss by decreasing the surface area facing the opposing surface, and from the aspect of lightening the weight of the spacer 7i. For example, preferably the width in the circumferential direction of the concave sections 19 in the axial direction is 1 to 2 times the width in the circumferential direction of the convex sections that exist between adjacent axial concave sections 19 in the circumferential direction, and the depth in the axial direction of these axial concave sections 19 is set to 1/3 to 2/3 the width in the axial direction of the rim sections 12c.

The shape of the axial concave sections 19 is not limited to a rectangular shape as illustrated in the figure, for example, various shapes could be employed such as a partial arc shape, elliptical shape, triangular shape and the like. Moreover, in this example, in regards to the phase in the circumferential direction, the phase of the axial concave sections 19 matches that of the column sections 13, however, it is also possible to shift the phase of these axial concaves sections 19 and the column sections 13 by half a pitch, and for the phase of the axial concave sections 19 to match the phase of the through holes 14. Furthermore, the number of axial concave sections 19 that are formed on the outside surfaces in the axial direction of the rim sections 12c can be different than the number of column sections 13 (through holes 14). The construction of this example can also be combined with the construction of any of the examples 1 to 8. The construction and function of the other parts are the same as in the fourth example.

### [Example 10]

FIG. 10 illustrates a spacer 7j of a tenth example of an embodiment of the present invention. In this spacer 7j, a pair of rim sections 12d is formed as being non-continuous and incomplete ring-shaped rim sections in the circumferential direction. In other words, each of these rim sections 12 is provided with a plurality (six in the example in the figure) of partial arc shaped rim elements 20, whose phase has been shifted half a pitch in the circumferential direction between the rim sections 12d. The edges on both ends in the circumferential direction of the rim elements 20 are continuous with the column sections 13, so that the overall spacer 7j is cylindrical, and when expanded, the shape would be a crank shape. In the construction of this example, non-continuous sections 26, which are between the rim elements 20 adjacent to each other in the circumferential direction, are composed of axial concave sections that are formed intermittently in the circumferential direction of the rim sections and pass through in the radial direction, and correspond to the concave sections that are recessed in a direction away from the adjacent members (outer raceway 11 of the outer-diameter side member 4, and the end surfaces in the axial direction of the retainers 9 or needle rollers 8).

Forming the non-continuous sections 26 at the same time the spacer 7j is formed as a single member by injection molding of synthetic resin is preferable from the aspect of saving material and simplifying the processing. However, in the case of forming the spacer 7j using a metallic material, the non-continuous sections 26 can be formed later by removing part of the rim sections 12 of the spacer 7 of the conventional construction illustrated in FIG. 17. In either case, the surface area where the outer circumferential surfaces and the outside surfaces in the axial direction of the rim sections 12d of the spacer 7j faces the outer raceway 11 and the end surfaces in the axial direction of the retainers 9 or needle rollers 8 can be reduced by the amount of these non-continuous sections 26. The construction of this example as well, can be combined with the construction of the first through ninth examples. The construction and function of the other parts are the same as in the fourth example.

### [Example 11]

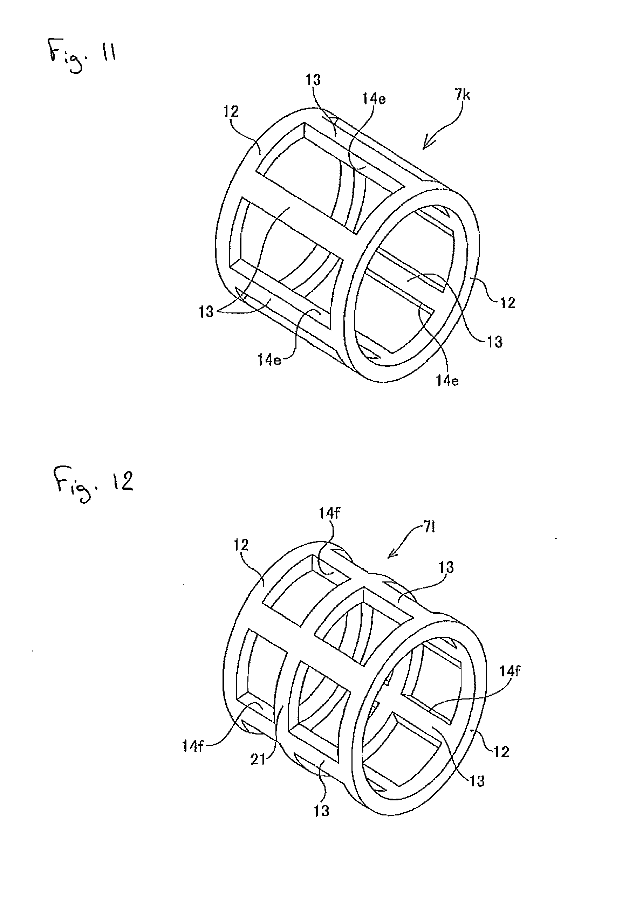

FIG. 11 illustrates a spacer 7k of an eleventh example of an embodiment of the present invention. In this spacer 7k, when compared with the conventional construction illustrated in FIG. 17, the number of column sections 13 is less, the pitch in the circumferential direction is greater, the area (area on the outer circumferential surface) of the opening of the through holes 14e between adjacent column sections 13 in the circumferential direction is larger, and the surface area of the outer circumferential surface of the spacer 7k which faces the outer raceway 11 is less. In other words, in the conventional construction, the area of the openings of the through holes 14 is less than the surface area of the outside surfaces in the radial direction of the column sections 13 (the width s in the circumferential direction of the through holes 14 is less than the width W in the circumferential direction of the column sections 13), however, in this example, the area on the outer circumferential surface of the through holes 14e is greater than the surface area on the outside surfaces in the radial direction of the column sections 13. In the construction of this example, the expanded portions on both end sections in the circumferential direction of the through holes 14e that is larger than in the through holes 14 of the conventional construction illustrated in FIG. 17 corresponds to the concave sections that are recessed in direction away from the adjacent member (outer raceway 11 of the outer-diameter side member 4).

It is necessary that the number of column sections 13 of the spacer 7k be three or more, however, as long as the strength and rigidity of the spacer 7k can be ensured, a small number is preferred. Preferably, the number is three to six column sections 13. Moreover, preferably the width in the circumferential direction of the through holes 14e is greater than the width in the circumferential direction of the column sections 13, and preferably the width in the circumferential direction of the through holes 14e is two times or more the width in the circumferential direction of the column sections 13, and more preferably is maintained at three times or more. The upper limit of the width in the circumferential direction of the through holes 14e is regulated such that the required rigidity can be ensured when the number of column sections 13 is three or more. As long as this condition is satisfied, a larger width in the circumferential direction of the through holes 14e is preferred.

The formation of these through holes 14e at the same time that the spacer 7j is formed as a single member by injection molding of synthetic resin is preferred from the aspect of saving material and simplifying processing. However, when the spacer 7k is formed using a metallic material, the through holes 14e can be formed later by removing part of the column sections 13 (every other one or every other two column sections) of the spacer 7 of the conventional construction illustrated in FIG. 17. The construction of this example can also be combined with the construction of any of the examples 1 to 10. The construction and function of the other parts are the same as in the fourth example.

### [Example 12]

FIG. 12 illustrates a twelfth example of an embodiment of the present invention. The spacer 71 of this example is an improvement of the construction of the spacer 7k in the eleventh example, and additionally has a reinforcement rim section 21 in the middle section in the axial direction. In other words, this reinforcement rim section 21 is provided so as to connect the middle sections in the axial direction of the rim sections 13 and partition off the width of the through holes 14f. This reinforcement rim section 21 has the same diameter as the pair of rim sections 12 that are located on both end sections in the axial direction, and are concentric with those rim sections 12. In this example, by providing a reinforcement rib section 21, it is possible to sufficiently maintain the strength and rigidity of the spacer 71 even when the width in the circumferential direction of the through holes 14f is sufficiently large. The construction and function of the other parts are the same as in the eleventh example.

### [Example 13]

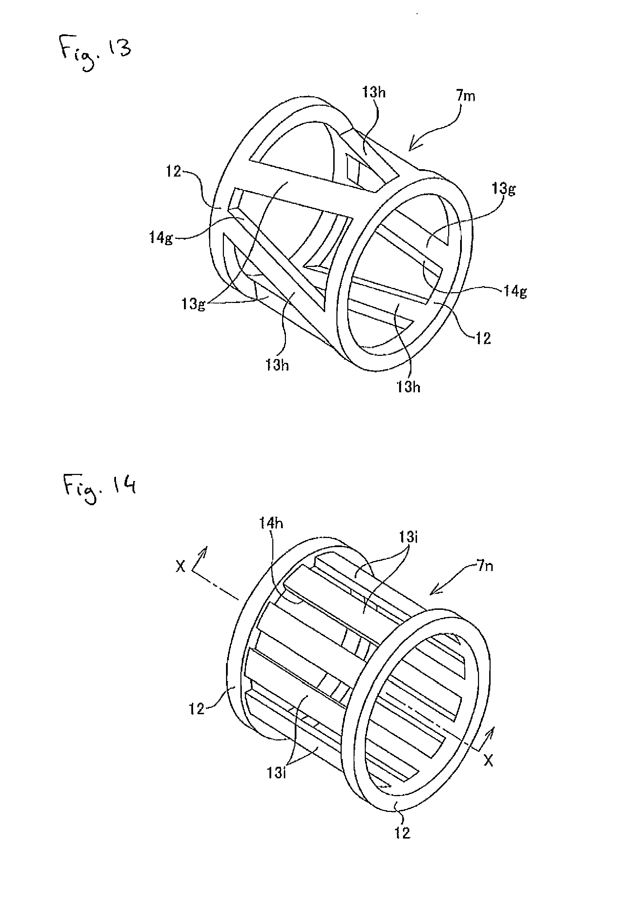

FIG. 13 illustrates a thirteenth example of an embodiment of the present invention. In the case of the spacer 7m of this example, an even number of column sections 13g, 13h (six columns sections in the example in the figure) are inclined with respect to the axial direction. The inclination directions of adjacent column sections 13g, 13h in the circumferential direction are opposite from each other. By giving the spacer 7m a torus shape by having the column sections 13g, 13h be inclined in this way, the strength and rigidity of the spacer 7m in the twist direction an the axial direction between the pair of rim sections 12 is improved over that of the eleventh example. By combining the construction of this example with that of the twelfth example, the strength and rigidity of the spacer 7m can be improved even more. The construction and function of the other parts are the same as in the eleventh example.

### [Example 14]

FIG. 14 and FIG. 15 illustrate a fourteenth example of an embodiment of the present invention. In the case of the spacer 7n in this example, the thickness in the radial direction of the column sections 13i when compared with that of the spacer 7 of the conventional construction illustrated in FIG. 17 is less. Moreover, the inside surfaces in the radial direction of these column sections 13i and the inner circumferential surfaces of the pair of rim sections 12 are located on a single cylindrical surface. All of the outside surfaces in the radial direction of the column sections 13i are recessed inward in the radial direction from the outer circumferential surfaces of the rim sections 12. In the construction of this example, the outside surfaces in the radial direction of the column sections 13i corresponds to the concave sections that are recessed in a direction away from the adjacent member.

Making the amount that the thickness in the radial direction of the column sections 13i is smaller compared with the thickness in the radial direction of the rim sections 12 as large as possible to the extent that the strength and rigidity of the spacer 7n can be ensured is preferable from the aspect of making the spacer 7n more lightweight. From the aspect of keeping the friction resistance with the outer raceway 11, which is the adjacent member, low, by causing the outside surfaces in the radial direction of the column sections 13i be recessed just a little (for example, 0.5 mm or greater and preferably 1 mm or greater) more than the outer circumferential surface of the rim sections 12, it is possible to prevent an oil film from being formed between the outer raceway 11 and the outer circumferential surface of the spacer, and thus it is possible to sufficiently reduce the friction resistance. The construction of this example, from the aspect of reducing the friction resistance with end surfaces in the axial direction of the retainers 9 or needle rollers 8, can be combined with the construction of examples 8 to 10, and from the aspect of making the spacer more lightweight, can be combined with the construction of examples 8 to 13. Furthermore, from the aspect of suppressing wear of the areas of rubbing with the adjacent members, which are the end surfaces in the axial direction of the retainers 9 or needle rollers, the construction of this example can be combined with the construction comprising concave sections of the second or third examples. The construction and function of the other parts are the same as in the fourth example.

The examples of construction of the present invention can be alternatively or additionally combined with each other.

### [Industrial Applicability]

The spacer for the radial needle roller bearing of the present invention can be widely used in double-row radial needle roller bearings of rotation support units of various kinds of machinery. The spacer can be suitably used in a double-row radial needle roller bearing that is assembled in the rotation support of a planet gear of a planetary gear apparatus of an automatic transmission for an automobile, however, is not limited to this, and can be used in a double-row radial needle roller bearing that is used in the rotation support of planetary gear apparatuses of various kinds of machinery, and furthermore can be used in a double-row radial needle roller bearing that is used in the rotation support of rotating members other than a planet gear.

### [Explanation of Reference Numbers]

- 1: Rotation support apparatus
- 2: Carrier
- 3: Inner-diameter side member (Planet shaft)
- 4: Outer-diameter side member (Planet gear)
- 5: Double-row radial needle roller bearing
- 6: Radial needle roller bearing
- 7, 7a to 7n: Spacer
- 8: Needle
- 9: Retainer
- 10: Inner raceway
- 11: Outer raceway
- 12, 12a to 12d: Rim section
- 13, 13a to 13i: Column section
- 14, 14a to 14h: Through hole
- 15: Oil supply path
- 16, 16a, 16b: Concave section
- 17: Inclined surface section
- 18: Flat surface
- 19: Concave section in the axial direction
- 20: Rim element
- 21: Reinforcement rim section
- 22: Concave section in the radial direction
- 23: Annular concave section
- 24: Round concave section
- 25: Round concave section
- 26: Non-continuous section

## Claims

1. A spacer for a radial needle roller bearing, comprising:
a pair of ring-shaped rim sections that are separated in the axial direction, and are concentric with each other;
a plurality of column sections that are located at a plurality of locations in the circumferential direction of the rim sections and that connect these rim sections;
the spacer placed between a cylindrical inner raceway that is formed around the outer circumferential surface of an adjacent inner-diameter side member, and a cylindrical outer raceway that is formed around the inner circumferential surface of an adjacent outer-diameter side member, and between a pair of radial needle roller bearings that are separated in the axial direction; and
concave sections formed in outside surfaces in the radial direction and/or circumferential direction of the column sections, and/or in outside surfaces in the radial direction and/or axial direction of the rim sections, such that the concave sections are recessed in a direction away from one or both of the adjacent members that are adjacent to the column sections or the rim sections.

2. The spacer for a radial needle roller bearing according to claim 1, wherein
the concave sections that are recessed in a direction away from the adjacent member are composed of circumferential concave sections that are formed in the outside surfaces in the circumferential direction of the column sections and recessed toward the inside in the circumferential direction; and
the width dimension in the circumferential direction of the column sections where these circumferential concave sections are formed is less than the width dimension in the circumferential direction of the through holes that are formed in between adjacent column sections in the circumferential direction.

3. The spacer for a radial needle roller bearing according to claim 2, wherein the circumferential concave sections are formed in positions that are aligned with each other in both outside surfaces in the circumferential direction of the column sections.

4. The spacer for a radial needle roller bearing according to claim 2, wherein a plurality of circumferential concave sections are formed in the axial direction of the column sections.

5. The spacer for a radial needle roller bearing according to claim 1, wherein
the number of column sections is three to six;
the surface area on the outer circumferential surface of the through holes that are formed between adjacent column sections in the circumferential direction is greater than the surface area of the outside surfaces in the circumferential direction of the column sections; and
the concave sections that are recessed in a direction away from the adjacent member are composed of enlarged portions of the through holes.

6. The spacer for a radial needle roller bearing according to claim 5, wherein
the number of column sections is four or six; and
the column section adjacent to each other in the circumferential direction are arranged so as to be inclined with respect to the axial direction in opposite directions from each other.

7. The spacer for a radial needle roller bearing according to claim 1, wherein
the concave sections that are recessed in a direction away from the adjacent member are formed by making the thickness in the radial direction of the column sections small, and causing the outside surfaces of the column sections to be recessed toward the inside in the radial direction more than the outer circumferential surfaces of the rim sections.

8. The spacer for a radial needle roller bearing according to claim 1, wherein the concave sections that are recessed in a direction away from the adjacent members are composed of axial concave sections that are formed in the outside surfaces in the axial direction of the rim sections, and that are recessed toward the inside in the axial direction.

9. The spacer for a radial needle roller bearing according to claim 8, wherein the axial concave sections are composed of partial conical convex surface shaped inclined surface sections that are formed in the outer half section of the rim sections.

10. The spacer for a radial needle roller bearing according to claim 8, wherein the axial concave sections are composed of a plurality of concave sections that are formed intermittently in the circumferential direction of the rim sections and over the length in the radial direction thereof.

11. The spacer for a radial needle roller bearing according to claim 8, wherein
the column sections are continuously connected by a plurality of rim elements that are partially arc shaped, and are located such that the phase in the circumferential direction is shifted a half pitch; and
the axial concave sections are composed of non-continuous sections between adjacent rim elements in the circumferential direction.

12. The spacer for a radial needle roller bearing according to claim 8, wherein the axial concave sections are composed of annular shape concave sections that are formed around the entire circumference in the middle section in the radial direction of the outside surfaces in the axial direction of the rim sections.

13. The spacer for a radial needle roller bearing according to claim 8, wherein the axial concave sections are composed of a plurality of round concave sections that are formed in the outside surfaces in the axial direction of the rim sections.

14. The spacer for a radial needle roller bearing according to claim 1, wherein the concave sections that are recessed in a direction away from the adjacent member are composed of radial concave sections that have a bottom and are formed in the outside surfaces in the radial direction of the column sections and are recessed toward the inside in the radial direction.

15. The spacer for a radial needle roller bearing according to claim 2, wherein
the radial concave sections are formed in the axial direction in the outside surfaces in the radial direction of the column sections, and both end sections in the circumferential direction of these radial concave sections are partitioned by the edge sections on both ends in the circumferential direction of the column sections, and both end sections in the axial direction of these radial concave sections are partitioned by the rim sections.

16. The spacer for a radial needle roller bearing according to claim 2, wherein the radial concave sections are composed of a plurality of round concave sections that are formed in the outside surfaces in the radial direction of the column sections.
